# EUROPÄISCHE PATENTSCHRIFT

(11) **EP 3 815 884 B1**
(45) Veröffentlichungstag und Bekanntmachung des Hinweises auf die Patenterteilung: **28.08.2024**
(21) Anmeldenummer: 19206226.3
(22) Anmeldetag: 30.10.2019
(51) Int. Cl.: B29C 65/82, G01N 29/04, G01N 29/44, B29C 65/34

(54) **VERFAHREN ZUR PRÜFUNG EINER SCHWEISSUNG**
METHOD FOR TESTING A WELDING JOINT
PROCÉDÉ DE VÉRIFICATION D'UNE SOUDURE

(43) Veröffentlichungstag der Anmeldung: 05.05.2021
(73) Patentinhaber: Georg Fischer Rohrleitungssysteme AG, 8201 Schaffhausen (CH)
(72) Erfinder: Wermelinger, Jörg, 8200 Schaffhausen (CH); Barbone, Riccardo, 8200 Schaffhausen (CH)
(74) Vertreter: Fenner, Seraina

(56) Entgegenhaltungen:
- WO-A1-2017/063355
- CN-A- 101 393 170
- US-A1- 2015 375 323
- US-A1- 2018 292 357
- US-B2- 7 873 495

## Beschreibung

Die Erfindung betrifft ein Verfahren zur Prüfung einer Schweissung von Kunststoffrohrleitungen mittels eines Datenverarbeitungsgeräts beinhaltend:
- Erfassen und Speichern von Dokumenten,
- Überwachen und Aufzeichnen der Installation und der Durchführung der Schweissung der Verbindung,
- Erstellen eines Schweissberichts,
- Prüfen der Schweissung mittels Ultraschall, wobei die Prüfung die Fehlstellen in der Schweissung erfasst und speichert.

Aus dem Stand der Technik sind die einzelnen Schritte wie das Erstellen von entsprechenden Dokumenten, das Durchführen einer Schweissung und Erstellen eines Schweissberichts wie auch das Prüfen der Schweissnaht bekannt. Jedoch werden die Unterlagen und Daten separat verwaltet und lassen keine automatische generierte Einschätzung der Schweissnaht zu.

Dies hat den Nachteil, dass meist nicht alle Unterlagen vorliegen und dennoch eine Zulassung der Schweissnaht erfolgt wie auch, dass nicht alle Daten in die Auswertung der Schweissnaht miteinfliessen.

Die WO 2017/063355A und CN 101393170B offenbaren eine Prüfung einer Schweissnaht durch Ultraschall. Die US 2018/0292357 und US 7873495B2 offenbaren eine Plattform bei der Berichte der Schweissprüfungen gesammelt werden, wie auch in der US 2015/0375323A1.

Es ist Aufgabe ein Verfahren vorzuschlagen, welches ermöglicht eine aus erfassten Dokumenten und Daten automatisch generierte Bewertung einer vor Ort durchgeführten Schweissnaht an einer Kunststoffrohleitung durchzuführen, welche mittels Ultraschall geprüft wurde.

Diese Aufgabe wird erfindungsgemäss dadurch gelöst, dass die Dokumente, der Schweissbericht und die Fehlstellen bzw. deren Daten mittels einer Software erfasst und gespeichert werden, wobei mittels eines Algorithmus der Software die gespeicherten Dokumente, Berichte, Fehlstellen und Daten ausgewertet werden und die Schweissnaht als den Anforderungen entsprechend oder nicht entsprechend eingestuft wird. All die aufgenommenen Dokumente und Daten geben Rückschlüsse über die Schweissnahtqualität, welche dann mittels eines Algorithmus zur Beurteilung ob die Schweissnaht den Anforderungen genügt oder nicht ausgewertet werden.

Das erfindungsgemässe Verfahren zur Prüfung einer Schweissnaht zwischen Kunststoffrohrleitungen oder Fittings und Rohrleitungen wie auch Schweissungen mit Elektroschweissmuffen wird mittels Datenverarbeitungsgeräts durchgeführt und entsprechend ausgewertet.

Vorzugsweise kann als Datenverarbeitungsgerät ein Smartphone, ein Tablet oder auch ein tragbarer Computer eingesetzt werden, wie auch andere bekannte Datenverarbeitungsgeräte.

Zum Prüfverfahren gehört unter anderem das Erfassen und Speichern von Dokumenten, vorzugsweise Materialspezifikationen, Protokolle, Agreements, Zertifikate, Reports, technische Spezifikationen, usw., jegliche Dokumente die sich auf die Bauteile und die Verschweissung der Bauteile beziehen um deren Qualität und Zulässigkeit zu belegen. Selbstverständlich kann entsprechend definiert werden welche Dokumente usw. erforderlich sind um eine Auswertung durchführen zu können und welche optional hinterlegt werden können.

Die Installation und die Durchführung der Schweissung zwischen Fitting und Rohrleitung oder zweier Rohrleitungen wird mittels Datenverarbeitungsgerät überwacht und entsprechend aufgezeichnet, vorzugsweise durch Bilder und/oder Videos wie auch die Schweissdaten des Schweissgeräts erfasst und aufgezeichnet werden.

Aufgrund der erfassten Schweissdaten wird dann ein Schweissbericht erstellt, wobei die Erstellung des Schweissberichts vorzugsweise autonom durch die Software erfolgt oder der Schweissbericht bereits von der Schweissmaschine erstellt wurde und dieser nun an das Datenverarbeitungsgerät übermittelt wird Als weiteren Schritt des erfindungsgemässen Verfahrens wird die Schweissung mittels Ultraschall geprüft, wobei die Prüfung die Fehlstellen in der Schweissung erfasst und speichert.

All die gesammelten Dokumente, der Schweissbericht, die Daten und die Fehlstellen werden in einer Software hinterlegt bzw. derart gespeichert, dass eine Software auf all die die gesammelten Dokumente, den Schweissbericht, die Daten und die Fehlstellen zugreifen kann und mittels eines Algorithmus der Software die gespeicherten Dokumente, Berichte, Fehlstellen und Daten auswertet und die Schweissnaht als den Anforderungen entsprechend oder nicht entsprechend eingestuft wird.

Vorzugsweise ist das erfindungsgemässe Verfahren für Stumpfschweissungen und Elektroschweissmuffenschweissungen anwendbar. Entsprechend können Kunststoffrohre miteinander stumpfgeschweisst werden wie auch mittels einer Elektroschweissmuffe verbunden werden. Selbstverständlich können auch andere Fittings an die Rohrenden stumpfgeschweisst werden.

Es ist vorteilhaft, wenn die Installation schrittweise vorgegeben wird und schrittweise überwacht und aufgezeichnet wird. Beispielsweise wird mittels der Software angegeben wie die Muffe auf das Rohr aufzuschieben ist beispielsweise durch Bilder oder Zeichnungen und dies wird mittels Fotos, die mittels der Software hinterlegt werden überprüft. Vorzugsweise wird auch die Lage der Schweissung mit entsprechenden Koordinaten erfasst, wodurch immer genau nachvollzogen werden kann wo sich die Schweissung befindet auch wenn sie sich unter der Erde befindet, wie in den meisten Fällen der verlegten Rohrleitungen üblich ist.

Vorzugsweise beinhaltet der Algorithmus die Annahme eines Ausgangswerts aufgrund der zu verschweissenden Bauteile. Das heisst, wird beispielsweise eine Elektroschweissmuffe mit einem bestimmten Durchmesser und Material eingesetzt wird ein vordefinierter Zahlenwert als Ausgangswert von der Software angenommen. Weiter werden Werte für die durch die Ultraschallprüfung erfassten und gespeicherten Fehlstellen kalkuliert. Daraufhin werden die aufgrund der Fehlstellen kalkulierten Werte vom angenommen Ausgangswert subtrahiert und es ergibt sich ein Differenzwert der geprüften Schweissung. Dieser Differenzwert wird mit einem Sollwert, der ebenfalls für die entsprechende Schweissung vordefiniert ist, verglichen. Der Sollwert ist ein Erfahrungswert aufgrund vorausgehenden, zerstörenden Langzeitprüfungen, die ermittelten welcher Mindestwert vorliegen muss um den Anforderungen zu entsprechen. Entspricht der Differenzwert dem Sollwert oder liegt er darüber ist die Schweissung zulässig, liegt der Differenzwert unterhalb ist sie unzulässig.

Es ist vorteilhaft, wenn die Fehlstellen aufgrund ihrer Dimension kalkuliert werden. Das heisst, vorzugsweise wird die Breite, Länge und/oder Tiefe der Fehlstellen erfasst und entsprechend kalkuliert und als entsprechender Wert im Algorithmus berücksichtigt sowie vom angenommen Ausgangswert abgezogen.

Als vorteilhaft hat sich gezeigt, wenn die Software als eine App ausgebildet ist. Dadurch erhält der Anwender Rahmenbedingungen die ihm vorgegeben werden und die er erfüllen muss. Beispielsweise ist dann vorgegeben, dass zwingende Dokumente, Reports, usw. in die App einzupflegen sind, ansonsten wird die Schweissnaht nicht zugelassen bzw. es ist keine Bewertung durch die Software möglich. Auch wenn beispielsweise keine Fehlstellen nach der Prüfung in der Schweissung erkennbar waren und die Schweissung eigentlich als gut bewertet wird aber gewisse Dokumente für eine Freigabe fehlen. Jedoch kann eine solche Einstellung der App auch verändert werden und weniger restriktiv sein.

Vorzugsweise werden die Daten zentral beispielsweise in einer Cloud oder einem dezentralen Server gesammelt und gespeichert und mittels der Software darauf zugegriffen. Auch der Zugang zu den Daten über eine Webplattform ist möglich. Somit kann einerseits über eine Webplattform auf die Daten zugegriffen werden wie auch über eine App oder sonstige Software.

Vorzugsweise verfeinert sich der Algorithmus durch die Aufnahme von neuen Daten bzw. das System ist selbstlernend.

Ein Ausführungsbeispiel der Erfindung wird anhand der Figuren beschrieben, wobei sich die Erfindung nicht nur auf das Ausführungsbeispiel beschränkt. Es zeigen:

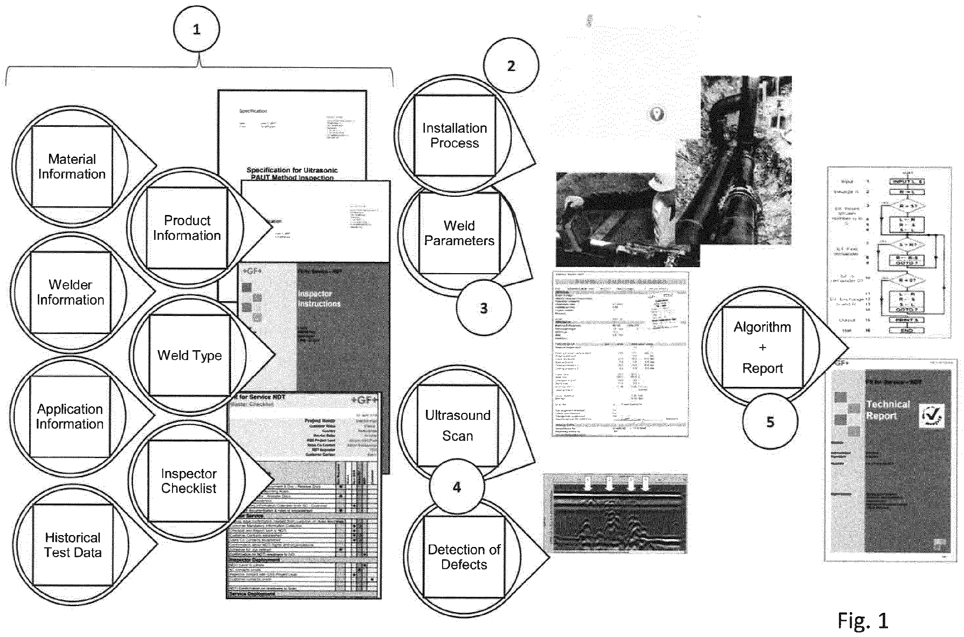

Fig. 1 eine schematische Ansicht des erfindungsgemässen Verfahrens und dessen beinhaltender Dokumente und Schritte.

Die in Fig. 1 dargestellte Zeichnung zeigt was das erfindungsgemässe Verfahren alles an Daten und Unterlagen benötigt um die Zulässigkeit einer Schweissnaht zu beurteilen. In Fig. 1 sind einige bevorzugte Dokumente 1 abgebildet die für das Verfahren mittels des der Software und dem Datenverarbeitungsgerät erfasst werden aufgezeigt. Selbstverständlich kann in der Software genau definiert werden welche Dokumente zwingend für die Beurteilung sind und welche optional sind. Diese Dokumente werden dann erfasst und gespeichert die Speicherung kann im Datenverarbeitungsgerät erfolgen wie auch auf einem externen Server oder in einer Cloud. Der Installationsprozess 2 der Rohre und/oder Fittings wird dann beispielsweise mit Bild überwacht, wie auch die Lage bzw. Koordinaten der Schweissung festgehalten werden. Dies wird auch wieder über die Software eingepflegt und verwaltet. Zudem werden die Daten der Ultraschallschweissung erfasst 3, wobei das Schweissgeräts die Daten an die Software des erfindungsgemässen Verfahrens bzw. an das Datenverarbeitungsgerät übermittelt und ein Schweissbericht 3 mit Hilfe der Software erstellt wird oder der Schweissbericht 3 bereits von der Schweissmaschine erstellt wird und an die Software übermittelt wird. Mittels Ultraschall wird die Schweissung anschliessend geprüft 4, wobei die Prüfung Aufschluss über Fehlstellen in der Schweissung gibt. Mittels eines der Software hinterlegten Algorithmus 5 (Flussdiagramm rein fiktive Darstellung) und den erfassten Daten und Dokumenten wird ein Report 5 erstellt der Aufschluss gibt ob die Schweissung zulässig oder unzulässig ist vorzugsweise aufgrund der Schweissnahtqualität.

### Bezugszeichenliste

- 1: Erfassen des Dokuments
- 2: Überwachen und Aufzeichnen der Installation und Schweissung
- 3: Schweissprotokoll
- 4: Ultraschallprüfung
- 5: Algorithmus und Auswertung der Schweissung

## Patentansprüche

1. Verfahren zur Prüfung einer Schweissung von Kunststoffrohrleitungen mittels eines Datenverarbeitungsgeräts beinhaltend:
• Erfassen und Speichern von Dokumenten,
• Überwachen und Aufzeichnen der Installation und der Durchführung der Schweissung der Verbindung,
• Erstellen eines Schweissberichts oder Übernehmen eines Schweissberichts von der Schweissmaschine,
• Prüfen der Schweissung mittels Ultraschall, wobei die Prüfung die Fehlstellen in der Schweissung erfasst und speichert,
**dadurch gekennzeichnet, dass** die Dokumente, der Schweissbericht und die Fehlstellen bzw. deren Daten mittels einer Software erfasst und gespeichert werden, wobei mittels eines Algorithmus der Software die gespeicherten Dokumente, Berichte, Fehlstellen und deren Daten ausgewertet werden und die Schweissnaht als den Anforderungen entsprechend oder nicht entsprechend eingestuft wird.

2. Verfahren nach Anspruch 1, **dadurch gekennzeichnet, dass** das Verfahren für Stumpfschweissungen und Elektroschweissmuffenschweissungen anwendbar ist.

3. Verfahren nach einem der Ansprüche 1 oder 2, **dadurch gekennzeichnet, dass** die Installation schrittweise vorgegeben und schrittweise überwacht und aufgezeichnet wird.

4. Verfahren nach einem der Ansprüche 1 bis 3, **dadurch gekennzeichnet, dass** der Algorithmus folgende Schritte beinhaltet:
• Annahme eines Ausgangswerts aufgrund der zu verschweissenden Bauteile,
• Kalkulieren eines Wert aufgrund der erfassten und gespeicherten Fehlstellen,
• Subtraktion des kalkulierten Werts der Fehlstellen vom Ausgangswert,
• Prüfen ob der erreichte Differenzwert oberhalb oder unterhalb eines vorgegeben Sollwerts liegt, aufgrund dessen die Schweissung als zulässig oder unzulässig gilt.

5. Verfahren nach einem der Ansprüche 1 bis 4, **dadurch gekennzeichnet, dass** die Fehlstellen aufgrund ihrer Dimension kalkuliert werden.

6. Verfahren nach einem der Ansprüche 1 bis 5, **dadurch gekennzeichnet, dass** zur Kalkulation der Fehlstellen die Breite, Länge und/oder Tiefe der Fehlstellen erfasst und ausgewertet werden.

7. Verfahren nach einem der Ansprüche 1 bis 6, **dadurch gekennzeichnet, dass** die Software durch eine App gebildet wird.

## Claims

1. Method for inspecting a weld of plastic pipes by means of a data processing device, comprising:
• capturing and storing documents;
• monitoring and recording the installation and the implementation of the weld of the j oint;
• producing a welding report, or adopting a welding report from the welding machine;
• testing the weld ultrasonically, wherein the test detects and stores the defects that are in the weld;
**characterized in that** software is used to capture and store the documents, the welding report and the defects, more specifically the data on said defects, wherein an algorithm of the software is used to evaluate the stored documents, reports, defects and data on said defects, and to classify the welded joint as compliant or non-compliant with the requirements.

2. Method according to Claim 1, **characterized in that** the method can be applied to butt-fusion welds and electrofusion-coupler welds.

3. Method according to either Claim 1 or Claim 2, **characterized in that** the installation is specified step by step, and is monitored and recorded step by step.

4. Method according to any of Claims 1 to 3, **characterized in that** the algorithm includes the following steps:
• adopting an initial value based on the components to be welded;
• calculating a value based on the detected and stored defects;
• subtracting the calculated value for the defects from the initial value;
• checking whether the difference value obtained lies above or below a defined threshold value, on the basis of which the weld is deemed to be admissible or inadmissible.

5. Method according to any of Claims 1 to 4, **characterized in that** the defects are calculated on the basis of their dimension.

6. Method according to any of Claims 1 to 5, **characterized in that** the width, length and/or depth of the defects is detected and evaluated for the purpose of calculating the defects.

7. Method according to any of Claims 1 to 6, **characterized in that** the software is formed by an app.

## Revendications

1. Procédé de contrôle d'une soudure de canalisations en matière synthétique à l'aide d'un dispositif de traitement de données, ledit procédé comprenant les étapes suivantes :
• acquérir et sauvegarder des documents,
• surveiller et enregistrer l'installation et la réalisation du soudage de la liaison,
• créer un rapport de soudage ou prendre en charge un rapport de soudage de la machine à souder,
• contrôler la soudure par ultrasons, le contrôle détectant et mémorisant les défauts de soudure,
**caractérisé en ce que** les documents, le rapport de soudage et les défauts ou leurs données sont détectés et mémorisés à l'aide d'un logiciel, les documents, rapports, défauts et leurs données mémorisés étant évalués à l'aide d'un algorithme dans le logiciel et le cordon de soudure étant classé comme répondant aux exigences ou non.

2. Procédé selon la revendication 1, **caractérisé en ce que** le procédé peut être utilisé pour des soudures bout à bout et des soudures à raccords par électrofusion.

3. Procédé selon l'une des revendications 1 ou 2, **caractérisé en ce que** l'installation est spécifiée étape par étape et surveillée et enregistrée étape par étape.

4. Procédé selon l'une des revendications 1 à 3, **caractérisé en ce que** l'algorithme comprend les étapes suivantes :
• supposer une valeur initiale sur la base des composants à souder,
• calculer une valeur sur la base des défauts détectés et mémorisés,
• soustraire la valeur calculée des défauts de la valeur initiale,
• contrôler si la valeur de différence obtenue est supérieure ou inférieure à une valeur cible spécifiée, sur la base de quoi le soudage est considéré comme admissible ou non admissible.

5. Procédé selon l'une des revendications 1 à 4, **caractérisé en ce que** les défauts sont calculés sur la base de leurs dimensions.

6. Procédé selon l'une des revendications 1 à 5, **caractérisé en ce que** la largeur, la longueur et/ou la profondeur des défauts sont détectées et évaluées afin de calculer les défauts.

7. Procédé selon l'une des revendications 1 à 6, **caractérisé en ce que** le logiciel est formé par une application.
